# EUROPÄISCHE PATENTSCHRIFT

(11) **EP 0 544 027 B1**
(45) Veröffentlichungstag und Bekanntmachung des Hinweises auf die Patenterteilung: **05.03.1997**
(21) Anmeldenummer: 91120167.1
(22) Anmeldetag: 26.11.1991
(51) Int. Cl.: F16L 3/01

(54) **Schleppkettenersatz**
Supporting chain replacement
Remplacement pour chaines de guidage pour câbles

(43) Veröffentlichungstag der Anmeldung: 02.06.1993
(60) Teilanmeldung: 96101531.0
(73) Patentinhaber: W.L. Gore & Associates GmbH, 85636 Putzbrunn (DE)
(72) Erfinder: Meier, Karl, W-8548 Heideck (DE); Steff, Josef, W-8831 Meinheim (DE); Trieb, Karl-Heinz, W-8820 Gunzenhausen (DE)
(74) Vertreter: Klunker . Schmitt-Nilson . Hirsch

(56) Entgegenhaltungen:
- DD-A- 265 449
- US-A- 3 473 769
- US-A- 3 630 325

## Beschreibung

Die Erfindung betrifft eine Leitungsführungsanordnung mit mindestens einem Leitungsaufnahmekanal und mit mindestens einer lose darin angeordneten Leitung sowie ein Verfahren zum Einbringen mindestens einer solchen Leitung in einen Leitungsaufnahmekanal.

Aus der US-A-3 630 325 ist eine Leitungsführungsanordnung bekannt, deren Leitungsaufnahmekanal als geschlossenes Rohr ausgebildet ist, das mit einer Vielzahl in Kanallängsrichtung im Abstand voneinander auftretender Quertrennungen versehen ist, damit der Leitungsaufnahmekanal unter Bildung eines ersten Trums und eines parallel dazu geführten zweiten Trums sowie eines schleifenartigen Übergangs zwischen den beiden Trums umbiegbar ist. Die Leitungsaufnahmekanalenden sind mit einer feststehenden bzw. mit einer in Längsrichtung des Leitungsaufnahmekanals hin- und herbeweglichen Einrichtung verbindbar. Die Quertrennungen erstrecken sich durch einen Deckenbereich hindurch in Seitenwandbereiche des Leitungsaufnahmekanals und setzen sich mindestens bis in die Nähe eines Bodenbereichs des Leitungsaufnahmekanals fort, um die Schleifenbildung zwischem ersten und zweitem Trum zu ermöglichen.

Leitungen, die in dem Leitungsaufnahmekanal dieser bekannten Leitungsführungsanordnung geführt werden sollen, müssen von einem Längsende des Leitungsaufnahmekanals aus eingefädelt werden.

Aus der DD-A-265 449 ist eine ähnliche Leitungsführungsanordnung bekannt, deren Leitungsaufnahmekanal jedoch aus einem elastischen Band gebildet ist, dessen beide Längsseiten durch Schnitte quer zur Längsrichtung in gewählten Abständen zueinander und mit gewählter Schnittlänge in ein Zugband mit quer zur Längsrichtung weisenden und profilierten Zungen ausgebildet ist. Von entgegengesetzten Längsseiten des elastischen Bandes sich erstreckende Zungen bilden einen geschlossenen oder nicht ganz geschlossenen Kanal, der ein den Kanalinnenraum füllendes Bandkabel aufnimmt. Im Fall des nicht ganz geschlossenen Kanals ist die Lücke zwischen den sich gegenüberstehenden Zungen klein im Verhältnis zur Breite des Bandkabels. Das Bandkabel muß daher auch in diesem Fall von einem Längsende des Kabelaufnahmekanals aus in diese Leitungsführungsanordnung eingefädelt werden.

Aus der US-A-3 473 769 ist eine Leitungsführungsanordnung bekannt, die einen Leitungsaufnahmekanal aufweist, der gebildet ist durch einen streifenförmigen Träger, von dessen beiden Längsseiten gleichmäßig in Längsrichtung beabstandete Leitungshaltungsbügel hochstehen, welche den Träger je überbrücken. Einen zum Träger parallel verlaufenden Brückenteil eines jeden Leitungshaltebügels kann man öffnen, um eine Leitung in den Leitungsaufnahmekanal einzulegen, und danach wieder mittels eines Schnappverschlusses schließen.

Man braucht bei dieser bekannten Leitungsführungsanordnung zwar die Leitungen nicht mehr von einem Ende des Leitungsaufnahmekanals aus einzufädeln, man muß aber nach dem Einlegen der Leitungen in den geöffneten Leitungsaufnahmekanal eine Vielzahl von Brückenteilen in Schnappschließstellung bringen. Beides ist insbesondere bei langen Leitungsführungsanordnungen mühsam.

Die genannten Lösungen erfordern entweder einen bestimmten Montageaufwand, um einen zunächst offenen Leitungsaufnahmekanal nach dem losen Einlegen einer oder mehrerer Leitungen zu schließen, oder sie erfordern einen Einfädelvorgang von einem Ende des Leitungskanals her, was insbesondere bei Leitungsführungsanordnungen erheblicher Länge und/oder Leitungen geringer Eigensteifigkeit Mühe bereiten kann.

Der Erfindung liegt die Aufgabe zugrunde, bei einer Leitungsführungsanordnung der eingangs angegebenen Art mit mindestens einem Leitungsaufnahmekanal das Einbringen der einen oder mehreren Leitungen in den Leitungsaufnahmekanal zu erleichtern.

Erfindungsgemäße Lösung dieser Aufgabe hinsichtlich einer Leitungsführungsanordnung einerseits und hinsichtlich eines Verfahrens zum Einbringen mindestens einer Leitung in einen Leitungsaufnahmekanal einer Leitungsführungsanordnung sind in den Ansprüchen 1 bzw. 18 angegeben. Vorteilhafte Weiterbildungen der Erfindung sind in den abhängigen Ansprüchen angegeben.

Mit vor- oder auskragend ist vorliegend gemeint, daß der Decken- bzw. Seitenbereich nur einen Endes festgelegt ist und von diesem Ende frei vorsteht.

Die erfindungsgemäße Lösung ist auch anwendbar bei Ausführungsformen von Leitungsführungsanordnungen, wie sie in der nachveröffentlichten eigenen EP-A-0 490 022 gezeigt sind.

Bei einer Ausführung des Leitungsaufnahmekanals gem. Fig. 22 der EP-A-0 490 022 bildet man demgegenüber erfindungsgemäß die gesamten Haltestifte oder mindestens deren sich über die obere Längsseite des Bandkabels überstehenden Bereiche der Haltestifte federnd nachgiebig aus. Die Höhe der Haltestifte und die Länge von deren über das Bandkabel ragenden Enden sind dabei so gewählt, daß sich das Bandkabel an den nachgiebigen Haltestiften vorbei bis auf das Gleitband drücken läßt und die Haltestifte nach diesem Eindrückvorgang wieder in ihre Normalposition zurückkehren können.

Geht man von einem Leitungsaufnahmekanal aus, wie er in Fig. 23 der EP-A-0 490 022 gezeigt ist, versieht man demgegenüber erfindungsgemäß eine Wand des rechteckigen Leitungsaufnahmekanals, beispielsweise dessen Decke oder eine Seitenwand, mit einer Längstrennung derart, daß die Decke bzw. die Seitenwand mindestens einen sich von einer anderen Kanalwand aus vorkragenden bzw. auskragenden Federbereich aufweist. Die Längstrennung kann dabei in der Mitte der Decke bzw. der Seitenwand oder an deren Übergang zu einer der beiden angrenzenden Kanalwände verlaufen. Im ersteren Fall weist die Decke bzw. Seitenwand zwei zueinander hingerichtete vorkragende Federbereiche auf, die sich je nur über einen Teil der Kanalbreite erstrecken. Im letzteren Fall weist die Decke bzw. Seitenwand einen vorkragenden Federbereich auf, der sich über die gesamte Kanalbreite erstreckt. Im letzteren Fall kann man beide an die Längstrennung angrenzenden Kanalwände federn nachgiebig ausbilden, so daß man die Leitung bzw. Leitungen wahlweise von der einen oder der anderen der beiden an die Längstrennung angrenzenden Kanalwände in den Leitungsaufnahmekanal hineindrücken kann, oder auch unter federndem Ausweichen dieser beiden an die Längstrennung angrenzenden Kanalwände.

Um das Eindrücken der Leitung bzw. Leitungen in den Leitungsaufnahmekanal zu erleichtern, kann die mit der Längstrennung ausgebildete Kanalwand mit ihrem vorkragenden Ende bzw. ihren vorkragenden Enden zum Inneren des Leitungsaufnahmekanals hingeneigt sein, um eine Leitungseinführungshilfe zu bilden.

Wenn die Leitungsführungsanordnung mehrere Leitungen oder Kabel führen soll, kann man entweder einen einzigen Leitungaufnahmekanal verwenden, der für die Aufnahme aller Leitungen bzw. Kabel ausgelegt ist, oder man kann die Leitungsführungsanordnung mit mehreren parallel nebeneinander verlaufenden Leitungsaufnahmekanälen ausbilden, die entweder in einer einstückig geformten oder extrudierten Leitungsaufnahmekanalanordnung nebeneinander gebildet sind oder die durch festes oder lösbares Verbinden mehrerer einzelner Leitungsaufnahmekanäle aneinander zu einem Leitungsaufnahmekanalverbund verbunden sind. Dabei weist jeder dieser Leitungsaufnahmekanäle eine Kanalwand mit einem vorkragenden Federbereich auf.

Bei der erfindungsgemäßen Leitungsführungsanordnung bildet man die Längstrennung vorzugsweise in dem Deckenbereich des Leitungsaufnahmekanals aus, also in derjenigen Kanalwand, die im schleifenartigen Übergangsbereich zwischen Obertrum und Untertrum außen liegt. In der Decke angeordnete und sich in die benachbarten Seitenwände bis zum der Decke gegenüberliegenden Kanalboden hin erstreckende Quertrennungen sind vorgesehen, um dem Leitungsaufnahmekanal die Schleifenbiegung zu ermöglichen.

Die Quertrennungen werden vorzugsweise durch Quernuten mit Nutgründen gebildet, die sich gegenüber der restlichen Nutbreite verbreitern, beispielsweise in Form eines umgekehrten T.

Bei relativ großen Bewegungsstrecken von horizontal hin- und herbeweglichen Einrichtungen kommt es zu entsprechend großen Obertrumlängen dann, wenn sich die bewegliche Einrichtung in derjenigen Endstellung befindet, die zur kürzesten Untertrumlänge führt. Bei einer raschen Bewegung oder beweglichen Einrichtung in Richtung zu dem zwischen Obertrum und Untertrum gebildeten Schleifenbereich, insbesondere mit starker Beschleunigung der beweglichen Einrichtung, kommt es aufgrund der auf das Obertrum einwirkenden Schubkraft leicht zu Verwerfungen des Obertrums unter Buckel- oder gar Knickbildung. Dies führt zu einer starken mechanischen Belastung der Leitungsführungsanordnung und der damit geführten Leitungsanordnung.

Dieses Problem wird bei einer Ausführungsform einer erfindungsgemäßen Ausführungsform dadurch überwunden, daß in einem Leitungsführungskanal eine Niederhalteeinrichtung angeordnet ist, welche das Obertrum in dem Bereich zwischen dem feststehenden Leitungsanordnungsende und derjenigen Endstellung des beweglichen Leitungsanordnungsendes, in welcher das Untertrum am kürzesten ist, am Boden des Leitungsführungskanals niederhält.

Die Niederhalteeinrichtung wird vorzugsweise durch zwei Niederhalteleisten gebildet, die sich in Längsrichtung des Leitungsführungskanals in etwa über den Bereich zwischen dem feststehenden Leitungsanordnungsende und derjenigen Endstellung des beweglichen Leitungsanordnungsendes, in welcher das Untertrum am kürzesten ist, erstrecken, die von je einer der beiden einander gegenüberliegenden Seiteninnenwände des Leitungsführungskanals in Richtung aufeinanderzu abstehen und die in einem lichten Abstand vom Boden des Leitungsführungskanals verlaufen, der etwas größer ist als die Dicke der Leitungsanordnung.

Besonders vorteilhaft ist es, die Niederhalteeinrichtung bei einer Leitungsführungsanordnung anzuwenden, in deren Schleifenbereich eine mit dem Schleifenbereich mitbewegliche Rolle angeordnet ist, auf welcher die Leitungsführungsanordnung bei einer Bewegung der Leitungsführungsanordnung abrollt. Die Rolle weist vorzugsweise einen Durchmesser auf, der größer ist als der Schleifendurchmesser der Leitungsführungsanordnung bei nicht vorhandener Rolle. In besonders bevorzugter Weise ist die Rolle lose in dem Schleifenbereich angeordnet. Der Rollenumfang sollte gegenüber der Leitungsführungsanordnung bzw. dem Leitungsaufnahmekanal eine solche Reibung aufweisen, daß die Leitungsführungsanordnung bzw. der Leitungsaufnahmekanal bei einer auf das Obertrum einwirkenden Schubkraft nicht vom Rollenumfang abhebt. Deshalb ist der Rollenumfang vorzugsweise mit einem Material wie Gummi oder relativ weichem Kunststoff aufgebaut, das im Zusammenwirken mit dem Material der Leitungsführungsanordnung bzw. des Leitungsaufnahmekanals zu einer Reibungskraft führt, daß ein derartiges Abheben der Leitungsführungsanordnung bzw. des Leitungsaufnahmekanals von dem Rollenumfang vermieden wird.

Die Rolle verhindert einerseits bleibende buckelartige Verformungen der Leitungsführungsanodnung bzw. des Leitungsaufnahmekanals in Folge längeren Stillstands der beweglichen Einrichtung. Andererseits kann mit der Rolle der gewünschte Schleifendurchmesser vorgegeben werden. Desweiteren wirkt sich die Rolle als Dämpfungsglied aus, das Schwingungen dämpft, die bei schneller Hin- und Herbewegung der beweglichen Einrichtunng im Obertrumbereich auftreten.

Die Erfindung wird nun anhand von Ausführungsbeispielen näher erläutert. In den Zeichnungen zeigen:
- **Fig. 1**: eine perspektivische Darstellung einer erfindungsgemäßen Leitungsführungsanordnung mit einem einzigen Leitungsaufnahmekanal in perspektivischer Darstellung;
- **Fig. 2**: eine Stirnseitenansicht der in Fig. 1 gezeigten Leitungsführungsanordnung;
- **Fig. 3**: eine Stirnansicht einer gegenüber Fig. 1 modifizierten Leitungsführungsanordnung;
- **Fig. 4**: eine Stirnansicht der in den Fig. 1 und 2 gezeigten Ausführungsform, jedoch mit einer Trennwand innerhalb des Leitungsaufnahmekanals;
- **Fig. 5**: eine Stirnansicht einer Ausführungsform gemäß Fig. 3, jedoch mit einer Trennwand in dem Leitungsaufnahmekanal;
- **Fig. 6**: eine Stirnansicht einer Leitungsführungsanordnung mit vier Leitungsaufnahmekanälen;
- **Fig. 7**: eine Stirnansicht einer Leitungsführungsanordnung mit drei Leitungsaufnahmekanälen, die je mit einer Trennwand versehen sind;
- **Fig. 8**: eine Ausführungsform eines Leitungsaufnahmekanals, bei dem eine Längstrennung zwischen einem Seitenende des Deckenbereichs und der benachbarten Seitenwand vorgesehen ist;
- **Fig. 9**: eine Ausführungsform, bei welcher eine Längstrennung am oberen Ende einer Seitenwand vorgesehen ist;
- **Fig. 10**: eine Ausführungsform, wie sie in Fig. 1 gezeigt ist, jedoch mit modifizierten Quertrennungen;
- **Fig. 11 und 12**: in schmatisierter Seitenansicht eine Leitungsführungsanordnung mit Niederhalteeinrichtung, wobei in den Fig. 11 und 12 entgegengesetzte Endpositionen der beweglichen Einrichtung dargestellt sind;
- **Fig. 13**: eine Querschnittsdarstellung einer Leitungsführungsanordnung mit einer Niederhalteeinrichtung gem. Fig. 11 und 12; und
- **Fig. 14 und 15**: in schematischer Seitendarstellung eine Leitungsführungsanordnung mit einer im Schleifenbereich angeordneten Rolle.

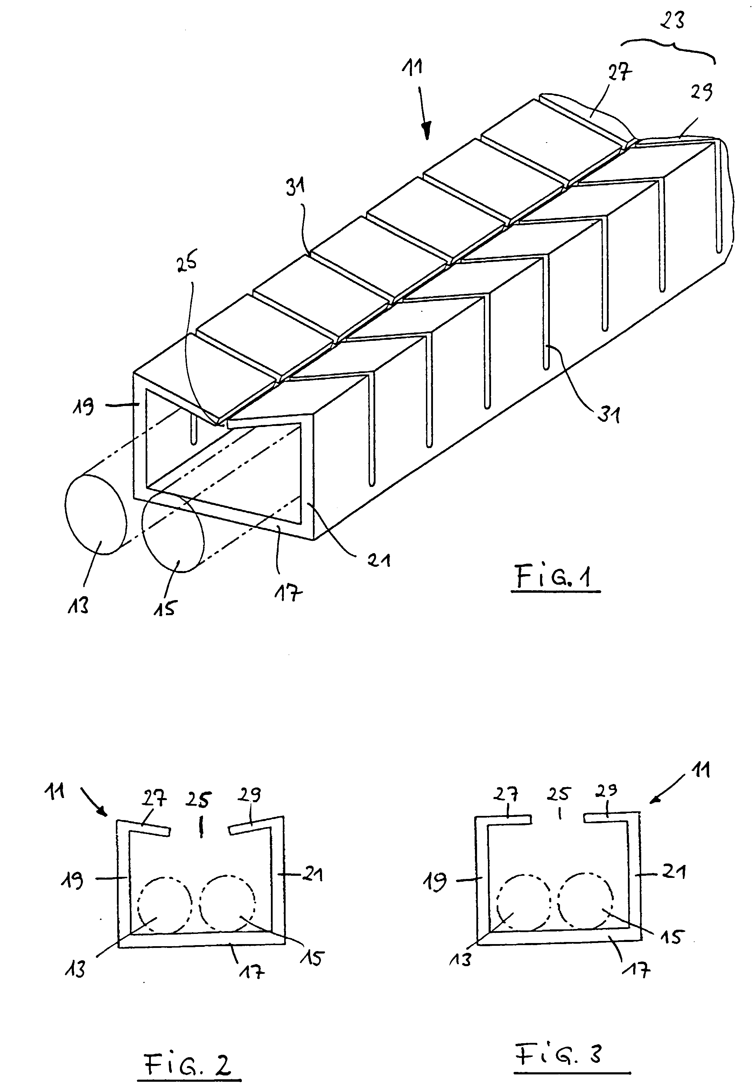

Fig. 1 zeigt in perspektivischer Darstellung eine erste Ausführungsform einer Leitungsführungsanordnung in Form eines Leitungsaufnahmekanals 11, der beispielsweise zwei nebeneinander angeordnete Rundleitungen 13 und 15 aufnehmen kann, die in Fig. 1 durch strichpunktierte Linien angedeutet sind. Der Leitungsaufnahmekanal 11 weist einen Boden 17, eine linke Seitenwand 19, eine rechte Seitenwand 21 und eine Decke 23 auf. Die Decke 23 ist durch eine in ihrer Mitte in Kanallängsrichtung verlaufende Längstrennung 25 in einen linken Deckenbereich 27 und einen rechten Deckenbereich 29 unterteilt. Jeder der beiden Deckenbereiche 27 und 29 ist von seinem Längsseitenrand ausgehend zur Längstrennung 25 hin etwas zum Kanalinnenraum hin geneigt. Dadurch ergibt sich eine Art Einführhilfe, die das Eindrücken einer Leitung in den Innenraum Leitungsaufnahmekanals 11 erleichtert.

Der Leitungsaufnahmekanal 11 ist mit in seiner Längsrichtung periodisch aufeinanderfolgenden Quertrennungen 31 versehen, die sich durch beide Deckenbereiche 27 und 29 hindurch und in die je benachbarte Seitenwand 19 bzw. 21 hinein erstrecken, vorzugsweise bis zu dem Übergang der jeweiligen Seitenwand 19 bzw. 21 mit dem Boden 17.

Der Leitungsaufnahmekanal 11 besteht aus einem elastischen, d. h., federnd nachgiebigen Material. Aufgrund dieser Federeigenschaft können die Deckenbereiche 27 und 29 federnd zum Kanalinnenraum hin ausgelenkt werden, wenn eine Leitung oder ein Kabel in den Leitungsaufnahmekanal 11 eingedrückt werden soll. Diese Federfähigkeit wird durch das Vorhandensein der Quertrennungen 31 gefördert.

Ist die Leitungsführungsanordnung zwischen einer feststehenden Einrichtung und einer relativ zu dieser hin- und herbeweglichen Einrichtung so lang, daß sich das jeweilige Obertrum auf dem Untertrum ablegt, stellt man den Leitungsaufnahmekanal 11 aus einem Material mit guten Gleiteigenschaften her, damit Obertrum und Untertrum mit ihren Bodenbereichen gut aufeinander gleiten können. Die Schleifenbildung am Übergang zwischen Obertrum und Untertrum wird durch die Quertrennungen 31 ermöglicht.

Es besteht allerdings auch die Möglichkeit, lediglich den Boden 17 aus gut gleitendem Material herzustellen, oder auf dem Boden 17 ein Material mit guter Gleitfähigkeit aufzubringen.

Vorzugsweise wird der Leitungsaufnahmekanal aus einem elastischen Kunststoff mit guter Gleitfähigkeit hergestellt, beispielsweise Polypropylen. Es können auch andere Kunststoffe oder Metalle, beispielsweise Stahl, verwendet werden.

Die Höhe der Seitenwände 19 und 21, die Neigung der beiden Deckenbereiche 27 und 29 sowie die Breite der Längstrennung 25 sind so gewählt, daß die freien Enden der Deckenbereiche 27 und 29 dann, wenn die Kabel oder Leitungen 13 und 15 durch die längs getrennte Decke 23 hindurch bis zum Boden 17 des Leitungsaufnahmekanals 11 gedrückt sind, in ihre Ausgangsposition zurückfedern können. In Fig. 1 sind die Leitungen übertrieben dick dargestellt. In Wirklichkeit sind sie für die Abmessungen des dargestellten Leitungsaufnahmekanals dünner oder flacher.

In Fig. 2 ist die in Fig. 1 gezeigte Ausführungsform eines Leitungsaufnahmekanals 11 zusammen mit den darin untergebrachten Rundleitungen 13 und 15 nochmals in Stirnansicht gezeigt.

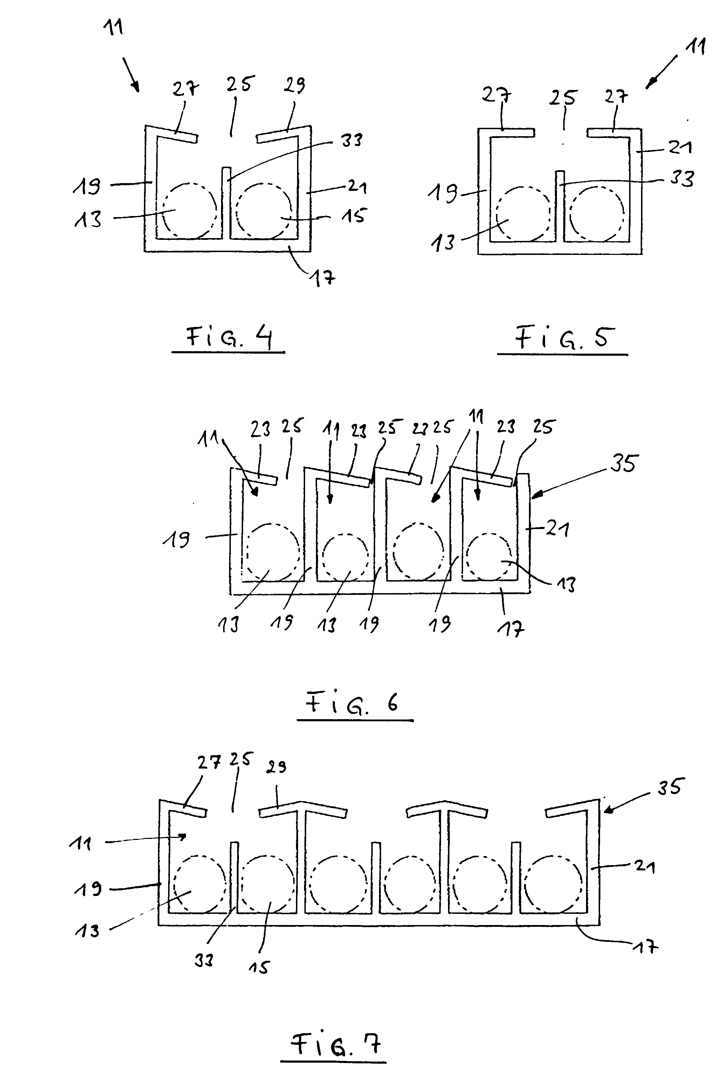

Eine ähnliche Ansicht zeigt Fig. 3, jedoch für eine Ausführungsform eines Leitungsaufnahmekanals 11, bei dem die voneinander getrennten Deckenbereiche 27 und 29 nicht geneigt sind, sondern parallel zum Boden 17 verlaufen.

Während bei den in den Fig. 1 bis 3 gezeigten Ausführungsformen die beiden Rundleitungen 13 und 15 ohne Trennung nebeneinanderliegen können, ist bei den in den Fig. 4 und 5 gezeigten Ausführungsformen in der Mitte des Leitungsaufnahmekanals 11 je eine Leitungstrennwand 33 vorgesehen.

Die Quertrennungen 31 erstrecken sich auch durch die Leitungstrennwände 33, um eine problemlose Schleifenbildung des jeweiligen Leitungsaufnahmekanals 11 zu ermöglichen.

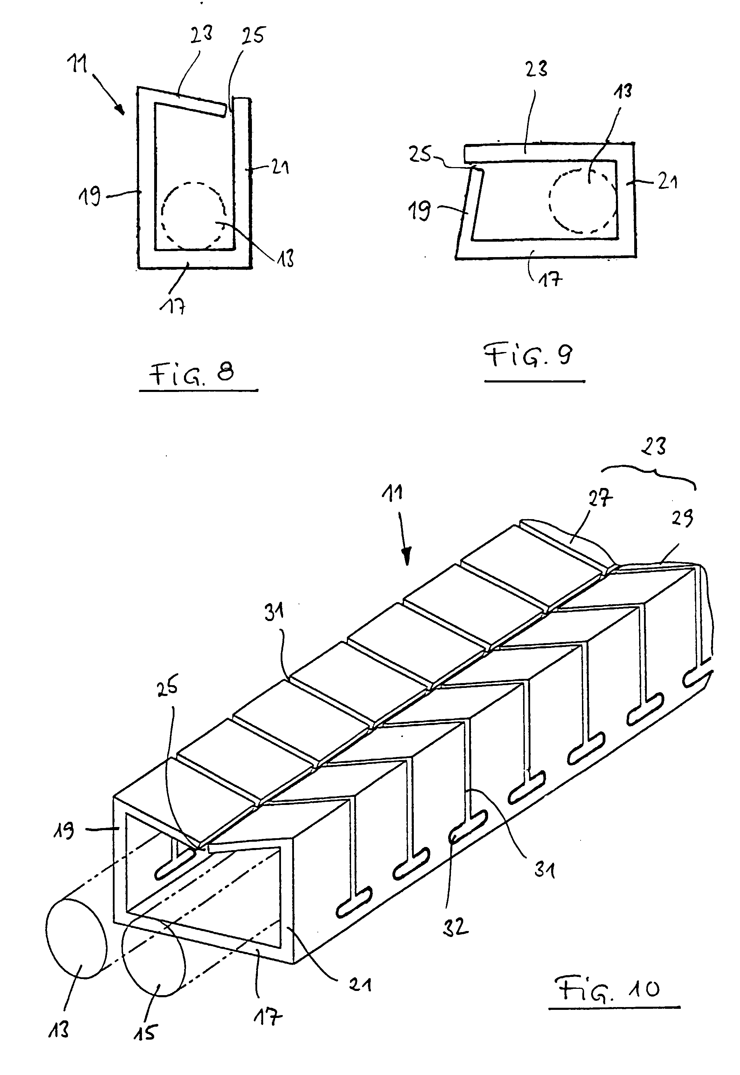

Die Fig. 6 und 7 zeigen Stirnansichten von Ausführungsformen, bei denen die erfindungsgemäße Leitungsführungsanordnung je mehrere parallel nebeneinander verlaufende Leitungsaufnahmekanäle aufweist.

Bei der Ausführungsform nach Fig. 6 sind in einer einstückig ausgebildeten Leitungsführungsanordnung 35 vier parallele Leitungsaufnahmekanäle 11 angeordnet, in denen bei dem dargestellten Beispiel je eine Rundleitung 13 angeordnet ist. Dabei verläuft die Längstrennung 25 eines jeden dieser Leitungsaufnahmekanäle 11 am Übergang zwischen der zugehörigen Decke 23 und der in Fig. 6 je rechten Seitenwand eines jeden Leitungsaufnahmekanals 11. Die Decke 23 eines jeden Leitungsaufnahmekanals 11 ist schräg geneigt, um das Eindrücken einer Leitung in den jeweiligen Leitungsaufnahmekanal 11 zu erleichtern. Dabei erstrecken sich die Quertrennungen 31 durch alle Kanalseitenwände, um die Schleifenbiegung zu ermöglichen.

Fig. 7 zeigt eine Leitungsführungsanordnung 35 mit drei parallelen Leitungsaufnahmekanälen 11, die je zur Aufnahme zweier Rundleitungen 13 und 15 geeignet und mit mittigen Leitungstrennwänden 33 versehen sind. Die Decken 23 der einzelnen Leitungsaufnahmekanäle 11 sind je in ihrer Mitte mit einer Längstrennung 25 versehen und die dadurch entstehenden linken und rechten Deckenbereich 27, 29 sind je zur zugehörigen Leitungstrennwand 33 hin schräg geneigt.

Bei dieser Ausführungsform erstrecken sich die Quertrennungen 31 durch sämtliche Kanalseitenwände und durch sämtliche Leitungstrennwände 33 hindurch, um eine problemlose Biegung im Bereich des Schleifenübergangs zwischen Obertrum und Untertrum zu ermöglichen.

Bei den dargestellten Beispielen sind Rundleitungen 13, 15 in die Leitungsaufnahmekanäle 11 eingebracht. Selbstverständlich können auch Bandkabel eingebracht werden, beispielsweise in die Leitungsaufnahmekanäle 11, die in den Fig. 2 und 3 gezeigt sind.

Fig. 8 zeigt in Stirnansicht einen Leitungsaufnahmekanal 11, bei dem der gesamte Deckenbereich 23 vorkragend ausgebildet ist. Dabei ist eine Längstrennung 25 zwischen dem freien Ende des Deckenbereichs 23 und der benachbarten Seitenwand 21 gebildet.

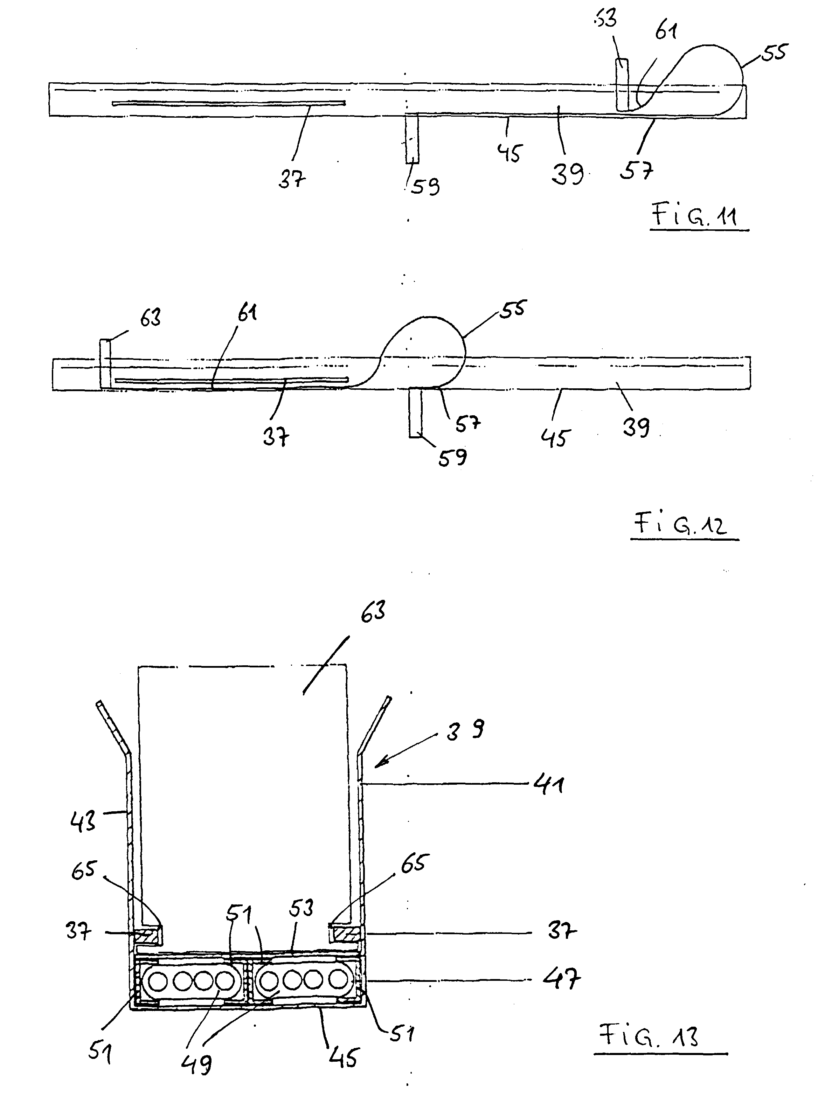

Fig. 9 zeigt in Stirnansicht eine Ausführungsform, bei welcher eine Seitenwand 19 vorkragend ausgebildet ist, wobei eine Längstrennung 25 zwischen dem oberen Ende dieser Seitenwand 19 und dem Deckenbereich 23 gebildet ist. Bei dieser Ausführungsform ist die Seitenwand 19 zum Kanalinneren hin federnd nachgiebig ausgebildet. Daher kann eine Rundleitung 13 durch federnd nachgiebiges Hineindrücken der Seitenwand 19 in das Kanalinnere hineingedrückt werden.

Fig. 10 zeigt eine Modifizierung der in Fig. 1 dargestellten Ausführungsform. Der einzige Unterschied gegenüber Fig. 1 besteht darin, daß die Quertrennungen 31 durch Quernuten gebildet sind, deren Nutgründe 32 sich in Form eines umgekehrten T verbreitern. Diese Nutgrundverbreiterung verbessert die Biegebeweglichkeit des Leitungsaufnahmekanals 11 und beseitigt die Gefahr, daß es zu einem unkontrollierten Einreißen an den unteren Nutenden kommt.

In den Fig. 11 bis 13 ist eine Ausführungsform einer Leitungsführungsanordnung mit Niederhalteleisten in schmatischer Weise dargestellt. Die Querschnittsdarstellung in Fig. 13 zeigt einen oben offenen Leitungsführungskanal 39 mit Seitenwänden 41 und 43. Auf einem Kanalboden 45 befindet sich eine Leitungsanordnung 47 mit zwei nebeneinander angeordneten Bandkabeln, die je zwischen zwei sich seitlich gegenüberliegenden Gleitrinnen 51 angeordnet sind, wobei die vier Gleitrinnen mittels in Längsrichtung der Leitungsanordnung 47 im Abstand voneinander angeordneter Querlaschen 53 zusammen mit den Bandkabeln 49 zu der Leitungsanordnung 47 zusammengefaßt sind. In geringem Abstand oberhalb der Querlaschen 53 befinden sich die beiden Niederhalteleisten 37, die von der Innenseite je einer der beiden Seitenwände 41 und 43 in den Innenraum des Leitungsführungskanals 39 hineinragen.

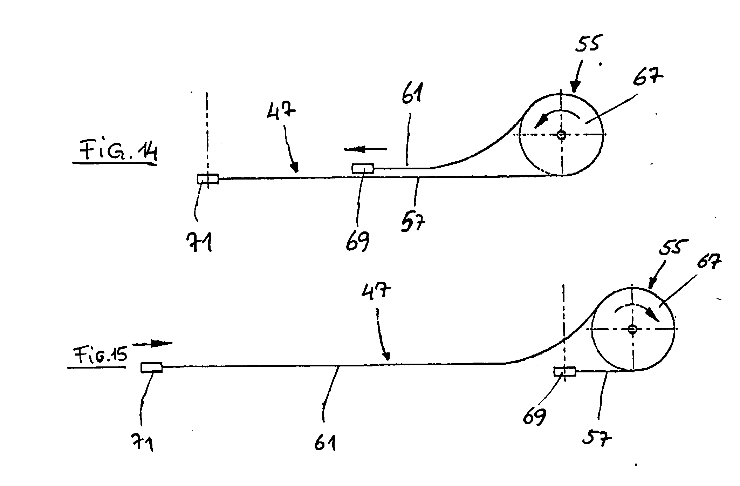

Wie in den Fig. 11 und 12 angedeutet ist, ist das vom Schleifenbereich 55 abliegende Ende des Untertrums 57 mit dem oberen Ende einer feststehenden Fußplatte 59 verbunden. Das vom Schleifenbereich 55 abliegende freie Ende des Obertrums 61 ist mit einer nach oben hochstehenden, beweglichen, als Abstandshalter dienenden Kopfplatte 63 verbunden. Die Fußplatte 59 ist mit einer nicht dargestellten feststehenden Einrichtung verbunden. Die Kopfplatte 63 ist mit einer nicht dargestellten hin- und herbeweglichen Einrichtung verbunden.

Bei einer Bewegung der beweglichen Einrichtung zwischen ihren beiden Endpositionen bewegt sich die Kopfplatte 63 zwischen zwei Enbereichen, die in den Fig. 11 und 12 dargestellt sind. Die Niederhalteleisten 37 sind zwischen der Position der feststehenden Fußplatte 59 und der in Fig. 12 gezeigten linken Endstellung der Kopfplatte 63, in welcher das Untertrum 57 am kürzesten ist, angeordnet. Die Niederhalteleisten 37 sind auf diesen Bereich der Bewegungsbahn der beweglichen Kopfplatte 63 beschränkt, um einerseits nicht mit dem Schleifenbereich 55 der Leitungsanordnung 47 zu kollidieren und weil andererseits Verwerfungen und Buckelbildungen aufgrund einer raschen Bewegung der Kopfplatte 63 ohne Vorhandensein der Niederhalteleisten 37 nur dann auftreten, wenn von der Kopfplatte 63 ein besonders langes Obertrum 61 geschoben wird.

Damit die von oben in den Leitungsführungskanal 39 hineinragende Kopfplatte 63 von den Niederhalteleisten 37 unbehindert in dem Leitungsführungskanal 39 bewegt werden kann, ist die Kopfplatte 63 bei der in Fig. 13 gezeigten Ausführungsform beidseits mit je einer Aussparung 65 versehen, in welche je eine der beiden Niederhalteleisten 37 bewegungsstörungsfrei hineinragen kann.

Es wäre auch möglich, die Breite der Kopfplatte soweit zu reduzieren, daß sie geringer ist als der lichte Abstand zwischen den beiden zueinander weisenden Niederhalteleisten 37.

Die Fig. 14 und 15 zeigen eine schematisierte Seitenansicht einer Leitungsführungsanordnung, in deren Schleifenbereich eine Rolle 67 lose angeordnet ist. Der Schleifenbereich 55 der Leitungsanordnung 47 rollt auf dem Umfang der Rolle 67 ab, wenn eine bewegliche Einrichtung 69 gegenüber einer feststehenden Einrichtung 71 horizontal hin- und herbewegt wird. Dabei kommt es zu einer Verlagerung des Schleifenbereichs 55, dem die Rolle 67 folgt.

Der Begriff "Rolle" ist vorliegend sehr allgemein zu verstehen. Er soll hier walzenartige Gebilde, entweder massiv oder hohl, kugelartige Gebilde und polygonale Gebilde umfassen.

## Patentansprüche

1. Leitungsführungsanordnung mit mindestens einem einen Bodenbereich (17), einen Deckenbereich (23) und Seitenwandbereiche (19, 21) aufweisenden Leitungsaufnahmekanal (11) und mit mindestens einer lose darin angeordneten ein- oder mehradrigen Leitung (13, 15); wobei:
der Leitungsaufnahmekanal unter Bildung eines ersten Trums und eines parallel dazu geführten zweiten Trums sowie eines schleifenartigen Übergangs zwischen den beiden Trums umbiegbar ist;
der Bodenbereich (17) des Leitungsaufnahmekanals (11), mit dem das erste Trum und das zweite Trum zueinander weisen, mit Material guter Aneinandergleitfähigkeit aufgebaut ist;
die Leitungsaufnahmekanalenden mit einer feststehenden bzw. mit einer in Längsrichtung des Leitungsaufnahmekanals (11) hin- und herbeweglichen Einrichtung verbindbar sind;
der Leitungsaufnahmekanal (11) mit einer Vielzahl in Kanallängsrichtung im Abstand voneinander auftretender Quertrennungen (31) versehen ist, die sich durch den Deckenbereich (23) hindurch erstrecken und sich in die Seitenwandbereiche (19, 21, 33) mindestens bis in die Nähe des Bodenbereichs (17) fortsetzen und dem Leitungsaufnahmekanal (11) die Schleifenbildung zwischen erstem und zweiten Trum ermöglichen;
und von dem Deckenbereich (23) und den Seitenwandbereichen (19, 21) des bzw. eines jeden Leitungsaufnahmekanals (11) mindestens einer (z. B. 23) dieser Bereiche vorkragend ausgebildet und relativ zu einem ihn tragenden Kanalwandbereich (19, 21) zum Kanalinneren hin federnd nachgiebig ist;
wobei der Deckenbereich (23) und die Seitenwandbereiche (19,21) im Verhältnis zu den Querschnittsabmessungen der mindestens einen Leitung (13,15) derart bemessen sind, daß die mindestens eine Leitung (13, 15) von der Außenseite des Leitungsaufnahmekanals (11) her durch den federnd nachgiebigen Bereich (27, 29) hindurch in das Innere des Leitungsaufnahmekanals (11) hineindrückbar ist und nach dem Rückfedern des federnd nachgiebigen Bereichs (27, 29) im Leitungsaufnahmekanal (11) eingeschlossen ist.

2. Leitungsführungsanordnung nach Anspruch 1,
dadurch gekennzeichnet,
daß der Leitungsaufnahmekanal (11) im wesentlichen Rechteckquerschnitt aufweist und zwei Seitenwände (19, 21) und eine Decke (23) besitzt und daß die Decke (23) eine Längstrennung (25) aufweist, derart, daß sie mindestens einen sich von einer der Seitenwände (19, 21) aus vorkragenden Federbereich (27, 29) aufweist.

3. Leitungsführungsanordnung nach Anspruch 2,
dadurch gekennzeichnet,
daß die Längstrennung (25) etwa in der Deckenmitte verläuft, so daß zwei federnd nachgiebige Deckenbereiche (27, 29) gebildet sind, die sich von je einer der beiden Seitenwände (19, 21) vorkragend aufeinanderzuerstrecken.

4. Leitungsführungsanordnung nach Anspruch 2,
dadurch gekennzeichnet,
daß die Längstrennung (25) am Übergang zwischen der Decke (23) und einer ersten der beiden Seitenwände (19, 21) verläuft und die Decke (23) sich von der anderen, zweiten Seitenwand (19, 21) aus vorkragend zu der ersten Seitenwand (19, 21) hin erstreckt.

5. Leitungsführungsanordnung nach Anspruch 4,
dadurch gekennzeichnet,
daß die erste Seitenwand (19, 21) anstelle der Decke (23) oder zusätzlich zu dieser zum Kanalinneren hin federnd nachgiebig ist.

6. Leitungsführungsanordnung nach einem der Ansprüche 2 bis 5,
dadurch gekennzeichnet,
daß die Decke (23) und im Fall der Ausbildung nach Anspruch 5 die Decke (23) und/oder die erste Seitenwand (19, 21) durch die Quertrennungen (31) in einzelne Federlaschen unterteilt ist bzw. sind.

7. Leitungsführungsanordnung nach einem der Ansprüche 1 bis 6,
dadurch gekennzeichnet,
daß die Quertrennungen (31) durch Quernuten mit sich verbreiternden Nutgründen (32) gebildet sind.

8. Leitungsführungsanordnung nach Anspruch 7,
dadurch gekennzeichnet,
daß sich die Nutgründe (32) T-förmig verbreitern.

9. Leitungsführungsanordnung nach Anspruch 1,
dadurch gekennzeichnet,
daß der Leitungsaufnahmekanal mit einem Kanalboden und mit von dessen beiden Längsseiten hochstehenden, in Kanallängserstreckung im wesentlichen periodisch voneinander beabstandeten, Seitenwand- und Deckenfunktion des Leitungsaufnahmekanals aufweisenden Winkelelementen gebildet ist,
daß die Winkelelemente je einen Seitenwandbereich und einen Deckenbereich, der eine in dem Leitungsaufnahmekanal angeordnete Leitung teilweise übergreift, aufweisen,
und daß mindestens die Deckenbereiche der Winkelelemente zum Kanalboden hin federnd nachgiebig sind, derart, daß die Leitung von der Außenseite des Leitungsaufnahmekanals aus durch die federnd nachgiebigen Deckenbereiche der Winkelelemente hindurch in das Innere des Leitungsaufnahmekanals hineindrückbar ist und nach dem Rückfedern der federnd nachgiebigen Deckenbereiche im Leitungsaufnahmekanal eingeschlossen ist.

10. Leitungsführungsanordnung nach einem der Ansprüche 1 bis 9,
dadurch gekennzeichnet,
daß zur Bildung einer Leitungseinführhilfe der bzw. jeder vorkragend ausgebildete, federnd nachgiebige Bereich (27, 29) mit seinem freien Ende zum Inneren des Leitungsaufnahmekanals (11) hin geneigt ist.

11. Leitungsführungsanordnung nach einem der Ansprüche 1 bis 10,
dadurch gekennzeichnet,
daß die beiden Trums ein Untertrum (57) und ein darüber führbares Obertrum (61) bilden
und daß der Leitungsaufnahmekanal (11) in einem Leitungsführungskanal (39) geführt ist, in dem eine Niederhalteeinrichtung angeordnet ist, welche das Obertrum (61) in dem Bereich zwischen dem feststehenden Leitungsaufnahmekanalende und derjenigen Endstellung des beweglichen Leitungsaufnahmekanalendes, in welcher das Untertrum (57) am kürzesten ist, am Kanalboden (45) des Leitungsführungskanals (39) niederhält.

12. Leitungsführungsanordnung nach Anspruch 11,
dadurch gekennzeichnet,
daß die Niederhalteeinrichtung durch zwei Niederhalteleisten (37) gebildet ist, die sich in Längsrichtung des Leitungsführungskanals (39) in etwa über den Bereich zwischen dem feststehenden Leitungsanordnung sende und derjenigen Endstellung des beweglichen Leitungsanordnungsendes in welcher das Untertrum (57) am kürzesten ist, erstrecken, die von je einer der beiden einander gegenüberliegenden Seitenwände (41, 43) des Leitungsführungskanals (39) in Richtung aufeinanderzu abstehen
und die in einem lichten Abstand vom Kanalboden (45) verlaufen, der etwas größer ist als die horizontale Dicke der Leitungsanordnung (47).

13. Leitungsführungsanordnung nach Anspruch 12,
wobei das Obertrumende über einen in den Leitungsführungskanal (39) hineinragenden Abstandshalter mit der sich oberhalb des Leitungsführungskanals (39) bewegenden beweglichen Einrichtung verbunden ist,
dadurch gekennzeichnet,
daß zwischen den beiden Niederhalteleisten (37) ein derartiger lichter Abstand besteht, daß der Abstandshalter zwischen den beiden Niederhalteleisten (37) hindurchbewegbar ist.

14. Leitungsführungsanordnung nach einem der Ansprüche 1 bis 13,
dadurch gekennzeichnet,
daß der Schleifenbereich (55) der Leitungsanordnung (47) um eine mit dem Schleifenbereich (55) mitbewegliche Rolle (67) herumgeführt ist, auf welcher bei einer Bewegung der beweglichen Einrichtung (69) die Leitungsanordnung (47) abrollt.

15. Leitungsführungsanordnung nach Anspruch 14,
dadurch gekennzeichnet,
daß die Rolle (67) einen Durchmesser aufweist, der größer ist als der Schleifendurchmesser des Schleifenbereichs (55) bei nicht vorhandener Rolle (67).

16. Leitungsführungsanordnung nach Anspruch 14 oder 15,
dadurch gekennzeichnet,
daß die Rolle (67) lose in dem Schleifenbereich (55) angeordnet ist.

17. Leitungsführungsanordnung nach einem der Ansprüche 14 bis 16,
dadurch gekennzeichnet,
daß der Rollenumfang mit einem Material wie Gummi oder Weichkunststoff aufgebaut ist, der im Zusammenwirken mit dem Material guter Aneinandergleitfähigkeit der Leitungsanordnung (47) eine hohe Reibungskraft bewirkt.

18. Verfahren zum Einbringen mindestens einer ein- oder mehradrigen Leitung (13, 15) in einen mindestens einen Bodenbereich (17), einen Deckenbereich (23) und Seitenwandbereiche (19, 21) aufweisenden Leitungsaufnahmekanal (11),
der unter Bildung eines ersten Trums und eines parallel dazu geführten zweiten Trums sowie eines schleifenartigen Übergangs zwischen den beiden Trums umbiegbar ist;
dessen Bodenbereich (17), mit dem das erste Trum und das zweite Trum zueinander weisen, mit Material guter Aneinandergleitfähigkeit aufgebaut ist;
dessen Leitungsaufnahmekanalenden mit einer feststehenden bzw. mit einer in Längsrichtung des Leitungsaufnahmekanals (11) hin- und herbeweglichen Einrichtung verbindbar sind;
der mit einer Vielzahl in Kanallängsrichtung im Abstand voneinander auftretender Quertrennungen (31) versehen ist, die sich durch den Deckenbereich (23) hindurch erstrecken und sich in die Seitenwandbereiche (19, 21, 33) mindestens bis in die Nähe des Bodenbereichs (17) fortsetzen und dem Leitungsaufnahmekanal (11) die Schleifenbildung zwischen erstem und zweiten Trum ermöglichen; und von dessen Deckenbereich (23) und Seitenwandbereichen (19, 21) mindestens einer (z. B. 23) dieser Bereiche vorkragend ausgebildet und relativ zu einem ihn tragenden Kanalwandbereich (19, 21) zum Kanalinneren hin federnd nachgiebig ist,
dadurch gekennzeichnet.
daß die mindestens eine Leitung (13, 15) von der Außenseite des Leitungsaufnahmekanals (11) her durch den federnd nachgiebigen Bereich (27, 29) hindurch in das Innere des Leitungsaufnahmekanals (11) soweit hineingedrückt wird, daß der federnd nachgiebige Bereich (27, 29) über der in das Innere des Leitungsaufnahmekanals (11) gedrückten Leitung (13, 15) in seine Ausgangsposition rückfedern kann und die Leitung (13, 15) danach im Leitungsaufnahmekanal (11) eingeschlossen ist.

## Claims

1. A line guiding assembly comprising at least one line receiving channel (11) having a floor portion (17), a cover portion (23) and sidewall portions (19, 21), and at least one single-core or multi-core line (13, 15) loosely disposed therein, wherein:
the line receiving channel (11) is adapted to be bent so as to form a first length and a second length guided parallel thereto, as well as a loop-shaped transition between both lengths;
the floor portion (17) of the line receiving channel (11), with which said first and second lengths are facing each other, is composed with material of good slidability for sliding on each other;
the line receiving channel ends are connectable to a stationary means and, respectively, to a means that is reciprocable in the longitudinal direction of the line receiving channel (11);
the line receiving channel (11) is provided with a multiplicity of transverse separations (31) spaced from each other in the longitudinal direction of the channel and extending through the cover portion (23) and continuing in the sidewall portions (19, 21, 33) at least to a location near the floor portion (17) and permitting the line receiving channel (11) the loop formation between first and second lengths;
and wherein, of the cover portion (23) and the sidewall portions (19, 21) of the or each line receiving channel (11), at least one (e.g. 23) of these portions is designed in projecting manner and is resilient towards the channel interior relative to a channel wall portion (19, 21) supporting said portion;
and with the cover portion (23) and the sidewall portions (19, 21), in relation to the cross-sectional dimensions of the at least one line (13, 15), being dimensioned such that the at least one line (13, 15) can be urged from the outside of the line receiving channel (11) through said resilient portion (27, 29) into the interior of the line receiving channel (11) and is enclosed in the line receiving channel (11) after resiling of the resilient portion (27, 29).

2. A line guiding assembly according to claim 1,
characterized in that the line receiving channel (11) is substantially of rectangular cross-section and comprises two sidewalls (19, 21) and a cover (23), and in that the cover (23) has a longitudinal separation (25) in such a manner that it has at least one spring portion (27, 29) projecting from one of the sidewalls (19, 21).

3. A line guiding assembly according to claim 2,
characterized in that the longitudinal separation (25) extends approximately in the middle of the cover such that two resilient cover portions (27, 29) are formed, each projecting from one of the two sidewalls (19, 21) and extending towards each other.

4. A line guiding assembly according to claim 2,
characterized in that the longitudinal separation (25) extends at the transition between the cover (23) and a first one of the two sidewalls (19, 21), and the cover (23) projects from the other, second sidewall (19, 21) and extends towards the first sidewall (19, 21).

5. A line guiding assembly according to claim 4,
characterized in that the first sidewall (19, 21) is resilient towards the channel interior instead of the cover (23) or in addition to the cover (23).

6. A line guiding assembly according to any one of claims 2 to 5,
characterized in that the cover (23) and, with the design according to claim 5, the cover (23) and/or the first sidewall (19, 21), is/are subdivided by the transverse separations (31) into individual resilient lugs.

7. A line guiding assembly according to any one of claims 1 to 6,
characterized in that the transverse separations (31) are constituted by transverse grooves having widened groove bottoms (32).

8. A line guiding assembly according to claim 7,
characterized in that the groove bottoms (32) widen in T-shaped manner.

9. A line guiding assembly according to claim 1,
characterized in that the line receiving channel is formed with a channel floor and with angular members upstanding from both longitudinal sides thereof and spaced apart in substantially periodical manner in longitudinal direction of the channel and having a sidewall and cover function of the line receiving channel,
that the angular members each have a sidewall portion and a cover portion which partly extends across a line disposed in the line receiving channel,
and in that at least the cover portions of the angular members are resilient towards the channel floor, such that the line can be urged from outside of the line receiving channel through the resilient cover portions of the angular members and into the interior of the line receiving channel and is enclosed in the line receiving channel after resiling of the resilient cover portions.

10. A line guiding assembly according to any one of claims 1 to 9,
characterized in that, for forming a line insertion aid, the or each projecting resilient portion (27, 29) has its free end inclined towards the interior of the line receiving channel (11).

11. A line guiding assembly according to any one of claims 1 to 10,
characterized in that the two lengths form a lower length (57) and an upper length (61) guided thereabove,
and in that the line receiving channel (11) is guided in a line guiding channel (39) having a hold-down means disposed therein which holds down the upper length (61) in the region between the stationary line receiving channel end and that end position of the movable line receiving channel end in which the lower length (57) is shortest, and keeps it to the channel floor (45) of the line guiding channel (39).

12. A line guiding assembly according to claim 11,
characterized in that the hold-down means is constituted by two hold-down rails (37) which extend longitudinally of the line guiding channel (39) approximately across the portion between the stationary line assembly end and that end position of the movable line assembly end in which the lower length (57) is shortest, which each project towards each other from one of the two opposing sidewalls (41, 43) of the line guiding channel (39) and which extend at a clear distance from the channel floor (45) which is somewhat larger than the horizontal thickness of the line assembly (47).

13. A line guiding assembly according to claim 12, in which the upper length end is connected to the movable means moving above the line guiding channel (39) via a spacer projecting into the line guiding channel (39),
characterized in that such a clear distance is present between the two hold-down rails (37) that the spacer is adapted to pass between the two hold-down rails (37).

14. A line guiding assembly according to any one of claims 1 to 13,
characterized in that the loop portion (55) of the line assembly (47) is passed around a roller (67) which is movable together with the loop portion (55) and on which the line assembly (47) performs a rolling motion upon movement of the movable means (69).

15. A line guiding assembly according to claim 14,
characterized in that the roller (67) has a diameter which is greater than the loop diameter of the loop portion (55) when no roller (67) is present.

16. A line guiding assembly according to claim 14 or 15,
characterized in that the roller (67) is loosely disposed in the loop portion (55).

17. A line guiding assembly according to any one of claims 14 to 16,
characterized in that the roller circumference is composed with a material such as rubber or soft plastics material effecting a high frictional force in cooperation with the material of the line assembly (47) having good slidability for sliding on each other.

18. A method of introducing at least one single-core or multi-core line (13, 15) into at least one line receiving channel (11) having a floor portion (17), a cover portion (23) and sidewall portions (19, 21),
said line receiving channel (11) being adapted to be bent so as to form a first length and a second length guided parallel thereto, as well as a loop-shaped transition between both lengths;
the floor portion (17) of the line receiving channel (11), with which said first and second lengths are facing each other, being composed with material of good slidability for sliding on each other;
the line receiving channel ends thereof being connectable to a stationary means and, respectively, to a means that is reciprocable in the longitudinal direction of the line receiving channel (11); the line receiving channel (11) being provided with a multiplicity of transverse separations (31) spaced from each other in the longitudinal direction of the channel and extending through the cover portion (23) and continuing in the sidewall portions (19, 21, 33) at least to a location near the floor portion (17) and permitting the line receiving channel (11) the loop formation between first and second lengths;
and of the cover portion (23) and the sidewall portions (19, 21) of said line receiving channel (11), at least one (e.g. 23) of these portions being designed in projecting manner and being resilient towards the channel interior relative to a channel wall portion (19, 21) supporting said portion;
characterized in
that the at least one line (13, 15) is urged from outside of the line receiving channel (11) through said resilient portion (27, 29) into the interior of the line receiving channel (11) to such an extent that the resilient portion (27, 29) can resile in its initial position above the line (13, 15) urged into the interior of the line receiving channel (11), and the line (13, 15) is then enclosed in the line receiving channel (11).

## Revendications

1. Système de guidage de conducteurs comportant au moins un canal récepteur de conducteurs (11), comprenant une zone de fond (17), une zone de couvercle (23) et des zones de parois latérales (19, 21), ainsi qu'au moins un conducteur (13, 15) à un ou plusieurs éléments disposé librement dans le canal ; système dans lequel :
- le canal récepteur de conducteurs peut être recourbé en formant un premier brin et un second brin, guidé parallèlement au premier, ainsi qu'une zone de transition en forme de boucle entre les deux brins ;
- la zone de fond (17) du canal récepteur (11), par laquelle le premier brin et le second brin sont dirigés l'un vers l'autre est constituée d'un matériau ayant une bonne aptitude de glissement relatif ;
- les extrémités du canal récepteur de conducteurs peuvent être reliées avec un dispositif fixe ou bien mobile alternativement dans la direction longitudinale du canal récepteur de conducteurs (11) ;
- le canal récepteur de conducteurs (11) est pourvu d'un grand nombre de séparations transversales (31) espacées les unes des autres dans la direction longitudinale du canal, s'étendant à travers la zone de couvercle (23) et se prolongeant dans les zones de parois latérales (19, 21, 33) au moins jusqu'à proximité de la zone de fond (17) en permettant la création dans le canal récepteur de conducteurs (11) d'une boucle entre le premier et le second brin ;
- au moins une des zones constituée par la zone de fond (23) et les zones de parois latérales (19, 21) du ou de chaque canal récepteur de conducteurs (11) (par exemple la zone (23)) est disposée en saillie et est élastiquement flexible vers l'intérieur du canal par rapport à une zone de paroi de canal (19, 21) la supportant ;
- la zone de couvercle (23) et les zones de parois latérales (19, 21) sont dimensionnées par rapport aux dimensions de section d'au moins un conducteur (13, 15) de telle sorte que ce conducteur (13, 15) puisse être enfoncé à l'intérieur du canal récepteur (11) à partir du côté extérieur de ce canal (11) et à travers la zone élastiquement souple (27, 29), en étant enfermé dans le canal récepteur (11) après le retrait élastique de la zone élastiquement souple (27, 29).

2. Système de guidage de conducteurs selon la revendication 1, caractérisé en ce que le canal récepteur de conducteurs (11) a une section sensiblement rectangulaire et comporte deux parois latérales (19, 21) et un couvercle (23) et en ce que le couvercle (23) est pourvu d'une séparation longitudinale (25) de telle sorte qu'il comporte au moins une zone élastique (27, 29) faisant saillie d'une des parois latérales (19, 21).

3. Système de guidage de conducteurs selon la revendication 2, caractérisé en ce que la séparation longitudinale 25 est disposée à peu près au milieu du couvercle de façon à former deux zones de couvercle (27, 29) élastiquement souples, qui sont dirigées l'une vers l'autre à partir de chacune des deux parois latérales (19, 21).

4. Système de guidage de conducteurs selon la revendication 2, caractérisé en ce que la séparation longitudinale (25) est située dans la zone de transition entre le couvercle (23) et une première paroi latérale (19, 21) et le couvercle (23) s'étend, à partir de la seconde paroi latérale (19, 21), en étant dirigé vers la première paroi latérale (19, 21).

5. Système de guidage de conducteurs selon la revendication 4, caractérisé en ce que la première paroi latérale (19, 21) est agencée à la place du couvercle (23) ou en addition à celui-ci, de façon à être élastiquement souple vers l'intérieur du canal.

6. Système de guidage de conducteurs selon une des revendications 2 à 5, caractérisé en ce que le couvercle (23), et dans le cas de l'agencement de la revendication 5 le couvercle (23) et/ou la première paroi latérale (19, 21), est ou sont divisés par les séparations transversales (31) en différents voiles élastiques.

7. Système de guidage de conducteurs selon une des revendications 1 à 6, caractérisé en ce que les séparations transversales (31) sont créées par des rainures transversales ayant des fonds (32) qui s'élargissent.

8. Système de guidage de conducteurs selon la revendication 7, caractérisé en ce que les fonds de rainures (32) s'élargissent en forme de T.

9. Système de guidage de conducteurs selon la revendication 1, caractérisé en ce que le canal récepteur de conducteurs est constitué par un fond ainsi que par des éléments coudés, faisant saillie vers le haut à partir de ses deux côtés longitudinaux, espacés sensiblement périodiquement l'un de l'autre dans la direction longitudinale du canal et remplissant les fonctions de parois latérales et de couvercle dans ce dernier,
en ce que les éléments coudés comportent chacun une zone formant paroi latérale et une zone formant couvercle, qui s'accroche partiellement sur un conducteur disposé dans le canal récepteur,
- et en ce qu'au moins les zones formant couvercles des éléments coudés sont élastiquement souples en direction du fond du canal de telle manière que le conducteur soit enfoncé à l'intérieur de ce canal à partir de son côté extérieur et à travers les zones de couvercle élastiquement souples des éléments coudés, en étant enfermé dans le canal récepteur après le retrait élastique des zones de couvercle élastiquement souples.

10. Système de guidage de conducteurs selon une des revendications 1 à 9, caractérisé en ce que, pour créer un auxiliaire d'introduction de conducteurs, la ou chaque zone élastiquement souple en saillie (27, 29) est inclinée par son extrémité libre vers l'intérieur du canal récepteur de conducteurs (11).

11. Système de guidage de conducteurs selon une des revendications 1 à 10, caractérisé en ce que les deux brins forment un brin inférieur (57) et un brin supérieur (61), pouvant être guidé au-dessus de celui-ci, et en ce que le canal récepteur de conducteurs (11) est guidé dans un canal de guidage de conducteurs (39) où il est prévu un dispositif de retenue qui retient contre le fond (45) du canal de guidage de conducteur (39) le brin supérieur (61) dans la zone située entre l'extrémité fixe du canal récepteur et la position limite de l'extrémité mobile du canal récepteur où le brin inférieur (57) est le plus court.

12. Système de guidage de conducteurs selon la revendication 11, caractérisé en ce que le dispositif de retenue est constitué par deux nervures de retenue (37), qui s'étendent, dans la direction longitudinale du canal de guidage de conducteurs (39) dans ou au-dessus de la zone située entre l'extrémité fixe de l'ensemble de conducteurs, et la position limite de l'extrémité mobile de l'ensemble de conducteurs où le brin inférieur (57) est le plus court, lesdites nervures étant dirigées l'une vers l'autre à partir de chacune des deux parois latérales (40, 43), mutuellement opposées, du canal de guidage de conducteurs (39) et étant situées à une légère distance d'espacement du fond de canal (45), cette distance étant un peu plus grande que l'épaisseur horizontale de l'ensemble de conducteurs (47).

13. Système de guidage de conducteurs selon la revendication 12, où l'extrémité du brin supérieur est reliée, par l'intermédiaire d'une entretoise pénétrant dans le canal de guidage de conducteurs (39), avec le dispositif mobile se déplaçant au-dessus du canal de guidage de conducteurs (39), caractérisé en ce qu'il existe entre les deux nervures de retenue (37) un léger intervalle d'espacement qui est tel que l'entretoise d'espacement soit déplaçable dans celui-ci entre les deux nervures de retenue (37).

14. Système de guidage de conducteurs selon une des revendications 1 à 13, caractérisé en ce que la zone en forme de boucle (55) de l'ensemble de conducteurs (47) est guidé autour d'un rouleau (67) mobile avec la zone en forme de bouche (55) et sur lequel se déroule l'ensemble de conducteurs (47) lors d'un mouvement du dispositif mobile (69).

15. Système de guidage de conducteurs selon la revendication 14, caractérisé en ce que le rouleau (67) a un diamètre supérieur au diamètre de la zone en forme de boucle (55) en cas d'absence du rouleau (67).

16. Système de guidage de conducteurs selon une des revendications 14 ou 15, caractérisé en ce que le rouleau (67) est disposé librement dans la zone en forme de boucle (55).

17. Système de guidage de conducteurs selon une des revendications 14 à 16, caractérisé en ce que la périphérie du rouleau est formée d'un matériau tel que du caoutchouc ou une matière plastique molle, qui produit une grande force de frottement en coopération avec le matériau de bonne aptitude de glissement relatif de l'ensemble de conducteurs (47).

18. Procédé pour engager au moins un conducteur (13, 15) à un ou plusieurs éléments dans un canal récepteur de conducteurs (11) comportant au moins une zone de fond(17), une zone de couvercle (23) et des zones de parois latérales (19, 21), ce canal pouvant être recourbé en formant un premier brin et un second brin guidé parallèlement au premier, ainsi qu'une zone de transition en forme de boucle entre les deux brins ;
- la zone de fond (17) dudit canal, où le premier brin et le second brin sont dirigés l'un vers l'autre, étant constituée d'un matériau ayant une bonne aptitude de glissement relatif ;
- les extrémités du canal récepteur de conducteurs pouvant être reliées à un dispositif fixe ou bien déplaçable alternativement dans la direction longitudinale du canal récepteur de conducteurs (11) ;
- ledit canal étant pourvu d'un grand nombre de séparations transversales (31) espacées les unes des autres dans la direction longitudinale du canal, s'étendant à travers la zone de couvercle (23) et se prolongeant dans les zones de parois latérales (19, 21, 33) au moins jusqu'à proximité de la zone de fond (17) et permettant la formation d'une boucle entre le premier et le second brin dans le canal récepteur (11) ;
- et une desdites zones du canal constituées par la zone de couvercle (23) et les zones de parois latérales (19, 23) (par exemple la zone (23)) est réalisée en saillie et est élastiquement souple vers l'intérieur du canal par rapport à une zone de paroi de canal (19, 21) la supportant,
- procédé caractérisé en ce qu'au moins un des conducteurs (13, 15) est engagé à l'intérieur du canal récepteur (11) à partir du côté extérieur de ce canal récepteur (11) et à travers la zone élastiquement souple (27, 29) suffisamment loin pour que cette zone élastiquement souple (27, 29) puisse revenir élastiquement dans sa position initiale au-dessus du conducteur (13, 15) engagé à l'intérieur du canal récepteur (11) et que le conducteur précité (13, 15) soit ensuite enfermé dans le canal récepteur (11).
